# EUROPEAN PATENT APPLICATION

(11) **EP 4 793 658 A1**
(43) Date of publication of application: **19.08.2026**
(21) Application number: 25315050.2
(22) Date of filing: 14.02.2025
(51) Int. Cl.: G01S 7/481, G02B 5/28

(54) **SYSTEM COMPRISING A LIGHT RECEIVING MODULE**

(71) Applicant: STMicroelectronics International N.V., 1228 Plan-les-Ouates, Geneva (CH)
(72) Inventor: Bardonnet, Felix, 38000 GRENOBLE (FR); Caceres, Jelah Nieva, 750492 SINGAPORE (SG); Carnemolla, Enrico Giuseppe, EDINBURGH, EH38EN (GB); Jeannin, Olivier, 38000 GRENOBLE (FR); Johnson, Brandon Scott, EDINBURGH, EH6 5TE (GB); Leong, Hai Sheng, 597630 SINGAPORE (SG)
(74) Representative: Cabinet Beaumont

(57) **Abstract**

The present disclosure relates to a system (1) comprising a light emitting module (Tx) and a light receiving module (Rx). The emitting module has a light source (100) emitting light for illuminating one or more targets. The receiving module (Rx) receives, within a field of view (112), light reflected by the one or more targets. The receiving module (Rx) comprises a light sensor (110) and a multilayer interferometric angular filter (114) above the sensor (110). The filter (114) filters out light that reaches the filter (114) with angles outside of the field of view (112).

## Description

### Technical field

The present disclosure relates generally to electronic systems, and, more particularly, to electronic systems having a light emitting module and light receiving module, the light receiving module comprising a light sensor.

### Background art

In known electronic systems comprising a light emitting module with a light source that emits light for illuminating one or more target, and a light receiving module with a sensor for receiving the light reflected by the targets, noise degrades the performance of the system, for example reduces the dynamic range accuracy.

One source of noise in such known electronic system is the light that is received by the light receiving module, whereas this received light does not result in the reflection of the emitted light by the targets.

### Summary of Invention

There is a need for addressing all or some of the drawbacks of known imaging systems introduced above.

One embodiment addresses all or some of the drawbacks of known imaging systems introduced above.

For example, one embodiment allows for reducing the noise resulting from parasitic light received by the light receiving module, the parasitic light, for example, resulting from unwanted reflections of the emitted light.

One embodiment provides a system comprising:
a light emitting module having a light source configured to emit light for illuminating one or more targets; and
a light receiving module configured to receive, within a field of view of the light receiving module, light corresponding to the reflection of the emitted light by the one or more targets.
The light receiving module comprises a light sensor and a multilayer interferometric angular filter disposed above the sensor, the filter being configured to filter out light that reaches the filter with angles outside of the field of view.

One embodiment provides a method of filtering light in a system comprising a light emitting module and a light receiving module, the method comprising:
emitting light with a light source of the light emitting module for illuminating one or more targets;
receiving with the light receiving module, within a field of view of the light receiving module, light corresponding to the reflection of the emitted light by the one or more targets; and
with a multilayer interferometric angular filter of the light receiving module that is disposed above a light sensor of the light receiving module, filtering out light that reaches the filter with angles outside of the field of view.

According to one embodiment, the filter comprises a stack of at least two layers, each two successive layers of the stack having different refractive index.

According to one embodiment, two successive layers of the stack have different thickness.

According to one embodiment, the filter comprises a glass substrate, the stack of layers resting on and in contact with a first face of the glass substrate.

According to one embodiment, the angular filter further comprises a color filter, for example resting on and in contact with a second face of the glass substrate opposite to the first face.

According to one embodiment, the emitted light is near infrared red or infrared light, for example light having a wavelength of approximatively 940 nm.

According to one embodiment, the emitted light is near infrared red or infrared light, for example light having a wavelength of approximatively 940 nm.

According to one embodiment, the materials of the layers of the stack are chosen among amorphous silicon, silicon oxide, silicon nitride, silicon oxynitride, tantalum oxide and niobium oxide.

According to one embodiment, the light receiving module comprises a housing, the sensor being arranged in the housing and the housing comprising an aperture opposite to the sensor.

According to one embodiment, the angular filter is arranged in the aperture.

According to one embodiment, the light receiving module comprises an optical element such as a lens disposed above the sensor, preferably between the sensor and the aperture.

According to one embodiment, the field of view of the light receiving module is at least partly determined by a size of the aperture, a size of the sensor and/or the optical properties of the optical element and/or a distance between the sensor and the optical element and/or a distance between the sensor and the aperture.

According to one embodiment, the field of view of the light receiving module comprises received light having incident angles on the light receiving module in range from -40° to 40°.

### Brief description of drawings

The foregoing features and advantages, as well as others, will be described in detail in the following description of specific embodiments given by way of illustration and not limitation with reference to the accompanying drawings, in which:
Figure 1 illustrates, with a schematic sectional view, an electronic system according to one embodiment; Figure 2 illustrates, with a schematic sectional view, one example of operation of the electronic system of Figure 1;
Figure 3 illustrates, with a schematic sectional view, another example of operation of the electronic system of Figure 1;
Figure 4 illustrates, with a schematic sectional view, one embodiment of an optical element of the system of Figure 1;
Figure 5 illustrates, with a schematic sectional view, one alternative embodiment of the optical element of Figure 4; and
Figure 6 illustrates, with a schematic sectional view, one alternative embodiment of the system of Figure 1.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the known applications wherein an imaging system having a light emitting module and a light receiving module may be used have not been detailed, the described embodiments being compatible with these known applications.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 % or 10°, and preferably within 5 % or 5°.

In order to reduce the noise in a system comprising a light emitting module with a light source that emits light for illuminating one or more target, and a light receiving module with a sensor for receiving the light reflected by the targets, it is proposed here to provide an angular filter in the light receiving module. The angular filter is configured for filtering out parasitic light received by the light receiving module, the parasitic light resulting from unwanted reflection of the emitted light and being thus outside of the field of view of the light receiving module. For example, the imaging system is of the far field type when the ration of the distance from the one or more targets that are illuminated by the light emitted by the light source, for example in order to be imaged by the system, to receiving module, over the aperture diameter of the receiving module is superior or equal to 200. As another example, the imaging system is of the far field type, meaning that the one or more targets that are illuminated by the light emitted by the light source, for example in order to be imaged by the system, are disposed at a distance from the system where the waves of the emitted light can be treated as plane waves.

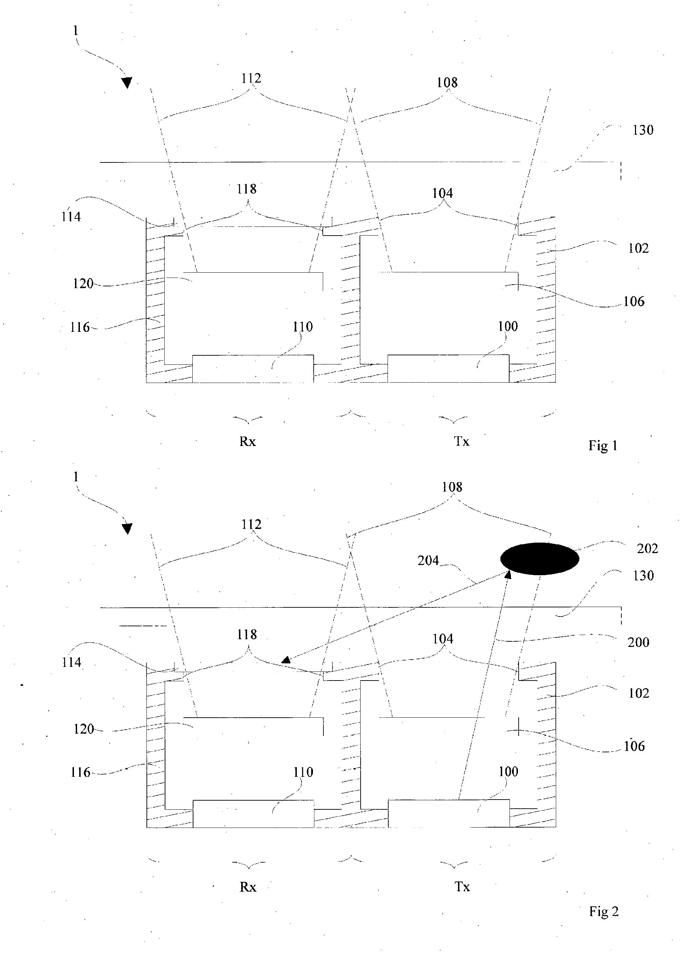

Figure 1 illustrates, with a schematic sectional view, an electronic imaging system 1 according to one embodiment.

The system 1 comprises a light emitting module Tx, and a light receiving module Rx.

The light emitting module Tx comprises a light source 100. The light source 100 is configured to emits light for illuminating one or more targets.

The emitted light is, for example, infrared light or near infrared light. The emitted light has, for example, a wavelength around 940 nm. The light source 100 is, for example, configured to emit the illuminating light in a pulsed manner, or, said in other words, the light source 100 emits light pulses.

For example, the module Tx comprises a housing 102, the light source 100 being disposed in the housing 102 and the housing 102 comprising an aperture 104 opposite to the light source 100 so that the light emitted by the light source can pass through the aperture 104 to exit the module Tx.

For example, the module Tx comprises a diffractive optical element (DOE) 106 that is disposed on the path of the emitted light to put in shape the emitted light. As an example, the element 106 is arranged above the light emitting source 100, for example between the light source 100 and the aperture 104. As an alternative example, the element 106 is arranged in the aperture 104.

The light provided by the light source 100 illuminates all the objects that are in the field of view 108 of the module Tx. The field of view (FoV) 108 of the module Tx is represented on Figure 1 with doted lines. As an example, the field of view of the module Tx is at least partly determined by the configuration of the light source 100 and/or the optical properties of the element 106 and/or the distance between the light source 100 and the element 106 and/or the size of the aperture 104 and/or the distance between the aperture 104 and the light source 100.

The light receiving module Rx comprises a light sensor 110. The module Rx, and, more particularly its sensor 110, are configured to received light resulting from the reflection of the emitted light by one or more targets that are illuminated by the emitted light. The received light resulting from the reflection of the emitted light by one or more targets is within a field of view 112 of the module Rx. In Figure 2, the field of view (FoV) 112 of the module Rx is represented with doted lines. For example, the one or more targets that reflect the emitted light toward the module Rx are arranged in the far field of the system 1, where the emitted light waves can be considered as plane waves.

The module Rx further comprises a multilayer interferometric angular filter 114. The angular filter 114 is disposed above the sensor 110. More particularly, the angular filter 114 is disposed on the path of received light by the module Rx, within the field of view of the module Rx, so that the received light that reaches the filter 114 and is not filtered out by the filter 114 then reaches the sensor 110.

For example, the module Rx comprises a housing 116, the sensor 110 disposed in the housing 116 and the housing 116 comprising an aperture 118 opposite to the sensor 110 so that the light received by the module Rx can pass through the aperture 118 before reaching the sensor 110.

In the example embodiment of Figure 1, the filter 114 is arranged within the aperture 118.

For example, the module Rx comprises an optical element 120, for example a lens, that is disposed above the sensor 110, or, said in other words, on the path of the received light. The lens 120 is, for example, configured to focus the received light on the sensor 110.

As an example, the lens 120 is arranged between the sensor 110 and the aperture 118. As an alternative example, the lens 118 may be arranged within the aperture 118 when the filter 114 is disposed between the sensor 110 and the aperture 118.

As an example, the lens 120 is arranged between the sensor 110 and the filter 114. As an alternative example, the filter 114 is arranged between the optical element 120 and the sensor 110, the optical element 120 being then preferably an optical component, for example a wavelength filter or a polarizer, that does not bend the path of the light rays.

As an example, the field of view of the module Rx is at least partly determined by the configuration (for example the size) of the sensor 110 and/or the optical properties of the optical element 120 and/or the distance between the sensor 110 and the optical element 120 and/or the size of the aperture 118 and/or the distance between the aperture 118 and the sensor 110. Preferably, when the optical element 120 does not bend the path of the light rays, for example when the filter 114 is arranged between the optical element 120 and the sensor 110, the field of view of the Rx module is at least partly determined by the configuration (for example the size) of the sensor 110 and/or the size of the aperture 118 and/or the distance between the aperture 118 and the sensor 110, but not by the optical properties of the optical element 120 and/or the distance between the sensor 110 and the optical element 120.

The angular filter 114 is configured to filter out the light, for example the light coming from the outside of the module Rx, that reach the filter 114 with angles, for example incident angle on the filter 114, outside of the field of view of the module Rx. For example, the field of view of the module Rx comprises all the light ray having incident angles on the module Rx, that is on a plan coplanar with the aperture 118 and parallel to a light receiving surface of the sensor 110, in the range from -A to A, with A a limit angle of the field of view, for example, equal to 40°. For example, the filter 114 is configured to filter out all the light rays having incident angles on the module Rx that are lower than -A or higher than A.

Furthermore, when the light emitted by the light source 100 is reflected by a target, for example a target arranged in the far field of the system 1, and the reflected light is then received by the module Rx, within the field of view 112 of the module Rx, the filter 114 is configured to let this received light pass through the filter 114, so that this received light then reaches the sensor 110.

As an example, the system 1 may comprise a cover glass 130 that is arranged above the modules Rx and Tx. For example, the glass 130 is part of a package of the system 1, the modules Rx and Tx being disposed in the package of the system 1. For example, when the system 1 comprises the glass 130, the light emitted by the light source 100 exit the module Tx, pass through the glass 130, is reflected back to the system 1 by one or more illuminated targets, pass through the glass 130 and enter the module Rx.

Figure 2 illustrates, with a schematic sectional view, one example of operation of the imaging system 1 of Figure 1.

In Figure 2, a light ray 200 is emitted by the light source 100, for illuminating one or more targets, for example one or more targets to image with the system 1. This light ray 200 exits the module Tx. The emitted light ray 200 is within the field of view 108 of the module Tx.

However, in the example of Figure 2, an object 202 is disposed at least partly within the field of view 108 of the module Rx, but this object 202 is not one of the targets to image with the system 1, for example, because the object 202 is not disposed in the far field of the system 1.

The object 202 is more particularly disposed on the path of the light ray 200. Thus, the light ray 200 is reflected back to the system 1 by the object 202. Said in other words, the light ray is scattered by the object 202, and a part of the scattered light goes back toward the system 1. A part of the light that is reflected (or scattered) by the object 202, for example a light ray 204, is received by the module Rx, whereas this light does not belong to the field of view 112 of the module Rx. Said in other words, this light 204 reaches the filter 114 whereas it does not belong to the field of view 112 of the module Rx. Said in further other words, this light 204 reaches the filter 114 with an angle that is outside the field of view 112 of the module Rx.

Because the filter 114 is configured to filter out this light 204, the parasitic light 204 does not propagate to the sensor 110.

Thus, the noise in the system 1 is reduced with respect to a similar system that does not comprise the angular filter 114, in which the parasitic light 204 wouldhave reaches the sensor 110.

Although not illustrated in Figure 2, when the light emitted by the light source 100 is reflected by a target, for example a target arranged in the far field of the system 1, and the reflected light is then received by the module Rx, within the field of view 112 of the module Rx, the filter 114 is configured to let this received light pass through the filter 114, so that this received light then reaches the sensor 110.

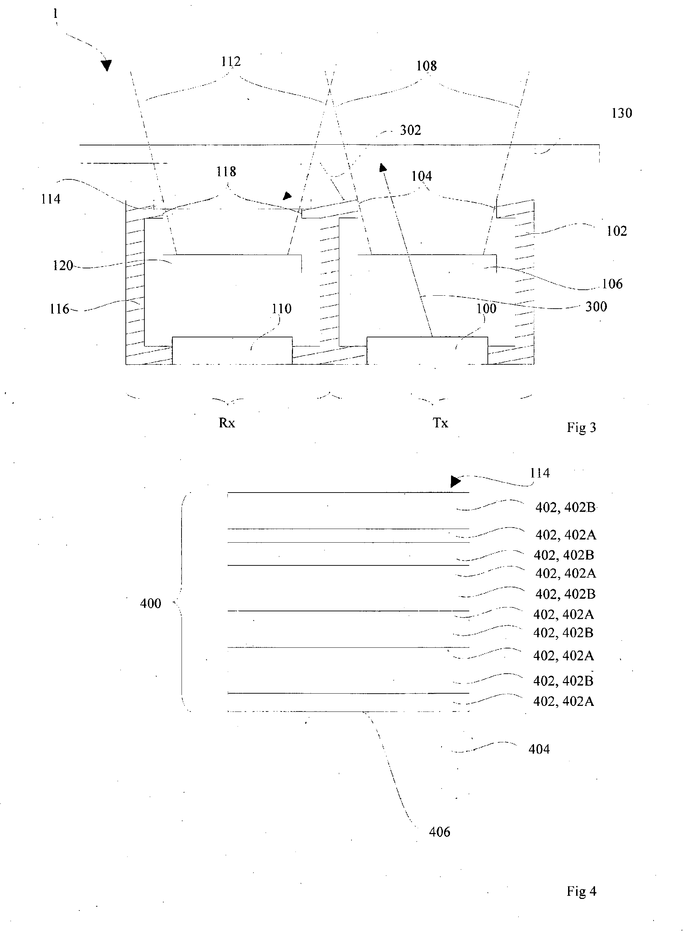

Figure 3 illustrates, with a schematic sectional view, another example of operation of the imaging system 1 of Figure 1.

In Figure 3, a light ray 300 is emitted by the light source 100, for illuminating one or more targets, for example one or more targets to image with the system 1. This light ray 300 exits the module Tx. The emitted light ray 200 is within the field of view 108 of the module Tx.

However, in the example of Figure 3 where the system 1 does comprise the glass cover 130, at least part of the light 300 is reflected by the glass cover, for example with or without having first being reflected several times inside the glass cover 130 between the two main faces of the glass covers 130.

The light reflected by the glass cover 130, for example represented in Figure 3 by a light ray 302, may reach the module Rx, for example after being reflected several times between the glass cover 130 and the housings 102 and/or 116.

This parasitic reflected light 302 is received by the module Rx, whereas this light 302 does not belong to the field of view 112 of the module Rx. Said in other words, this light 302 reaches the filter 114 whereas it does not belong to the field of view 112 of the module Rx. Said in further other words, this light 302 reaches the filter 114 with an angle that is outside the field of view 112 of the module Rx.

Because the filter 114 is configured to filter out this light 302, the parasitic light 302 does not propagate to the sensor 110.

Thus, the noise in the system 1 is reduced with respect to a similar system that does not comprise the angular filter 114, in which the parasitic light 302 would have reached the sensor 110.

Although not illustrated in Figure 3, when the light emitted by the light source 100 is reflected by a target, for example a target arranged in the far field of the system 1, and the reflected light is then received by the module Rx, within the field of view 112 of the module Rx, the filter 114 is configured to let this received light pass through the filter 114, so that this received light then reaches the sensor 110.

Figure 4 illustrates, with a schematic sectional view, one embodiment of the filter 114 of the system 1.

The multilayer interferometric angular filter 114 comprises a stack 400 of at least two layers 402, preferably of at least four layers 402.

For example, the layers 402 comprises layers 402A made of a first material, and layer 402B made of a second material, the layers 402A and 402B being alternated in the stack 400. As the material of layers 402A and the material of layers 402B are different, there refractive index are different. More generally, each two successive layers 402 of the stack 400 have different refractive index, and the layers 402 of the stack 400 may be made of more than two different materials.

For example, further to the fact that each two successive layers of the stack 400 are made of different material, at least two successive layers 402 of the stack 400 may have different thickness.

In the embodiment of Figure 4, the filter 114 further comprises a glass substrate 404, and the stack 400 preferably rest on and in contact with a face 406 of the glass substrate 404.

In alternative embodiments, the glass substrate 404 may be absent of the filter 114, for example when the stack 400 is directly disposed on the sensor 110. In such a case, the filter is, for example, designed in order to take into accompt the optical index of material of the layer of the sensor 110 on which the filter 114 is resting on and in contact with.

The materials of the layers 402 are, for example, chosen in the following list of materials, for example when the operating wavelength of the light source 100 is about 940 nm: amorphous silicon (αSi), silicon oxide (SiO₂), silicon nitride (SiN), silicon oxynitride (SiON), tantalum oxide (Ta₂O₅) and niobium oxide (Nb₂O₅). However, those skilled in the art are capable of using other materials for the layers 402 of the stack 400.

As an example, for an operating wavelength of about 940 nm, the stack 400 is made by the layers of Table 1 or of Table 2 below.

**[Table 1]**

| Material of the layer | Thickness of the layer in nanometers |
|---|---|
| SiO₂ | 158.175 |
| αSi | 279.308 |
| SiO₂ | 206.351 |
| αSi | 46.32 |
| SiO₂ | 354.741 |
| αSi | 28.031 |
| SiO₂ | 279.557 |
| αSi | 32.625 |
| SiO₂ | 307.316 |
| αSi | 18.702 |
| SiO₂ | 350.203 |
| αSi | 19.329 |
| SiO₂ | 305.560 |
| αSi | 32.314 |
| SiO₂ | 285.361 |
| αSi | 28.966 |
| SiO₂ | 354.519 |
| αSi | 39.967 |
| SiO₂ | 99.076 |

**[Table 2]**

| Material of the layer | Thickness of the layer in nanometers |
|---|---|
| SiON | 186.081 |
| SiN | 162.247 |
| SiON | 197.258 |
| SiN | 166.048 |
| SiON | 196.582 |
| SiN | 133.578 |
| SiON | 208.603 |
| SiN | 120.558 |
| SiON | 223.714 |
| SiN | 110.189 |
| SiON | 237.507 |
| SiN | 102.337 |
| SiON | 243.379 |
| SiN | 98.635 |
| SiON | 242.394 |
| SiN | 97.216 |
| SiON | 241.687 |
| SiN | 95.161 |
| SiON | 245.543 |
| SiN | 91.223 |
| SiON | 253.863 |
| SiN | 86.309 |
| SiON | 261.539 |
| SiN | 83.175 |
| SiON | 262.028 |
| SiN | 82.606 |
| SiON | 258.864 |
| SiN | 80.628 |
| SiON | 263.783 |
| SiN | 71.764 |
| SiON | 291.329 |
| SiN | 53.606 |
| SiON | 308.363 |
| SiN | 62.766 |
| SiON | 420.177 |

The two above examples of filters 114 are for example configured to filter out the light with incident angles on the filter 144 lower than -40° and higher than 40°, and to let the light passing through the filter 114 when having incident angles in the range from -40° to 40° that correspond to an example of field of view 112 of the module Rx.

Although two specific examples are given above, those skilled in the art are capable of designing the filter 114, and, more particularly the stack 400 of the filter 114, by choosing the number of layers 402, the material of each layer 402 and the thickness of each layer 402 depending of the field of view of. the module Rx, the disposition of the filter 114 in the module Rx, and the operating wavelength of the light source 100, for example by using simulation tool as, for example, the tool designated by the commercial name Optilayer or the tool designated by the commercial name OTF Studio.

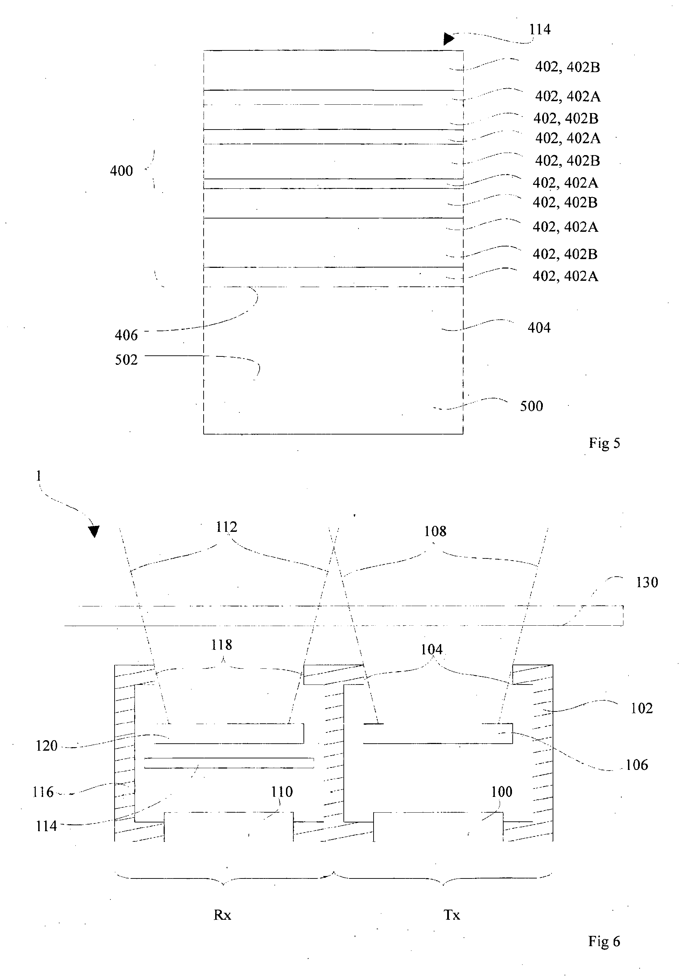

Figure 5 illustrates, with a schematic sectional view, one alternative embodiment of the optical element of Figure 4.

The filter 114 of Figure 5 is very similar to the one of Figure 4, and only the differences between these two filters 114 are here detailed.

In particular, the filter 114 of Figure 5 further comprises a wavelength (or color) filter 500. The filter 500 is configured to filter out the light having wavelength outside of the bandwidth of the filter 500.

For example, the filter 500 rests on and in contact with a face 502 of the glass substrate 404 opposite to the face 406.

The filter 500 may be made of resin, or may be a multilayer interferometric filter.

Figure 6 illustrates, with a schematic sectional view, one alternative embodiment of the system of Figure 1.

The system 1 of Figure 6 is very similar to the one of Figure 1, and only the differences between these two systems 1 are here detailed.

In particular, system 1 of Figure 6 differs from the one of Figure 1 in that its filter 114 is disposed not disposed in the aperture 118 of the housing 116, and is disposed, for example, between the optical element 120 and the sensor 110. In such a case, preferably, the optical element 120 is an optical component that does not bend the path of the light rays, and the field of view is thus, for example, not determined by the optical properties of the optical element 120.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

## Claims

1. A system (1) comprising:
a light emitting module (Tx) having a light source (100) configured to emit light for illuminating one or more targets; and
a light receiving module (Rx) configured to receive, within a field of view (112) of the light receiving module (Rx),
light corresponding to the reflection of the emitted light by the one or more targets,
wherein the light receiving module (Rx) comprises a light sensor (110) and a multilayer interferometric angular filter (114) disposed above the sensor (110), the filter being configured to filter out light that reaches the filter (114) with angles outside of the field of view (112).

2. A method of filtering light in a system (1) comprising a light emitting module (Tx) and a light receiving module (Rx), the method comprising:
emitting light with a light source (100) of the light emitting module (Tx) for illuminating one or more targets;
receiving with the light receiving module (Rx), within a field of view (112) of the light receiving module (Rx),
light corresponding to the reflection of the emitted light by the one or more targets; and
with a multilayer interferometric angular filter (114) of the light receiving module (Rx) that is disposed above a light sensor (110) of the light receiving module (Rx),
filtering out light that reaches the filter (114) with angles outside of the field of view (112).

3. The system according to claim 1 or the method according to claim 2, wherein the filter (114) comprises a stack (400) of at least two layers (402, 402A, 402B), each two successive layers of the stack having different refractive index.

4. The system or the method of claim 3, wherein two successive layers (402, 402A, 402B) of the stack (400) have different thickness.

5. The system or the method according to claim 3 or 4, wherein the filter (114) comprises a glass substrate (404), the stack (400) of layers (402, 402A, 402B) resting on and in contact with a first face (406) of the glass substrate (404).

6. The system or the method according to claim 5, wherein the angular filter (114) further comprises a color filter (500), for example resting on and in contact with a second face (502) of the glass substrate (404) opposite to the first face (406).

7. The system of any of claims 1 and 3 to 6 or the method according to any of claims 3 to 6, wherein the emitted light is near infrared red or infrared light, for example light having a wavelength of approximatively 940 nm.

8. The system or the method according to any of claims 3 to 6, wherein the emitted light is near infrared red or infrared light, for example light having a wavelength of approximatively 940 nm.

9. The system or the method according to claim 8, wherein the materials of the layers (402, 402A, 402B) of the stack (400) are chosen among amorphous silicon, silicon oxide, silicon nitride, silicon oxynitride, tantalum oxide and niobium oxide.

10. The system of any of claims 1 and 3 to 9 or the method of any of claims 2 to 9, wherein the light receiving module (Rx) comprises a housing (116), the sensor (110) being arranged in the housing (116) and the housing (116) comprising an aperture (118) opposite to the sensor (110).

11. The system or the method of claim 10, wherein the angular filter (114) is arranged in the aperture (118).

12. The system or the method of claim 10 or 11, wherein the light receiving module (Rx) comprises an optical element (120) such as a lens disposed above the sensor (110), preferably between the sensor (110) and the aperture (118).

13. The system or the method of claim 12, wherein the field of view (112) of the light receiving module (Rx) is at least partly determined by a size of the aperture (118), a size of the sensor (110) and/or the optical properties of the optical element (120) and/or a distance between the sensor (110) and the optical element (120) and/or a distance between the sensor (110) and the aperture (118).

14. The system of any of claims 1 and 3 to 13 or the method of any of claims 2 to 13, wherein the field of view of the light receiving module (Rx) comprises received light having incident angles on the light receiving module (Rx) in range from -40° to 40°.
